# EUROPEAN PATENT APPLICATION

(11) **EP 1 298 908 A1**
(43) Date of publication of application: **02.04.2003**
(21) Application number: 01122995.2
(22) Date of filing: 26.09.2001
(51) Int. Cl.: H04M 15/28

(54) **Method for the distribution of tariff information**

(71) Applicant: Telefonaktiebolaget L M Ericsson (Publ), 126 25 Stockholm (SE)
(72) Inventor: Mattila, Leena, 20780 Kaarina (FI); Aaltonen, Ismo, 20780 Kaarina (FI)
(74) Representative: Mohsler, Gabriele

(57) **Abstract**

The invention relates to a method for distributing tariff change information to a plurality of mobile terminals. It is further related to the processing said information in a mobile terminal.

The inventive method enables to avoid peak traffic at tariff switches related to a certain point in time. This is achieved by the time-shifted transmission of the new tariff information before the tariff switch takes place.

The new tariff information is stored and processed in mobile terminals that are adapted according to the invention.

## Description

### Field of invention

The invention relates to a method for distributing tariff change information to a plurality of mobile terminals. It is further related to the processing of said information in a mobile terminal.

### Description of prior art

Subscribers using a telecommunication service like voice phone, fax, mobile internet and alike are often interested in receiving information about the costs of the service.

In order to provide subscribers with information that permit at least a good estimation of the costs of a service, charge advice information has been introduced to mobile telecommunication systems like GSM (Global System for Mobile telecommunication) and UMTS (Universal Mobile Telecommunication System). Therefore advice of charge information elements are created in a charging instance, for example a central charging unit, and transmitted to a mobile terminal. The mobile terminal stores the advice of charge elements, starts a timer at the invocation of the service and calculates charge advice information.

The use of advice of charge information elements is described in more detail for example in the 3GPP technical specification TS 22.024, version 3.0.1 published October 1999. According to the technical specification, a mobile terminal calculating advice of charge information starts a timer at the reception of the connect message. This timer is used for the calculation of time related elements in the advice of charge information. The advice of charge information is calculated by multiplying a scaling factor with a sum of time related and data related and constant elements. A formula for the calculation is introduced as:
Advice of Charge = scaling * {constant + time related + data related}, wherein the time related addend is calculated in dependence of three information elements and the data related addend in dependence of two information elements.

Currently, the advice of charge information elements are transmitted during the set-up of a connection or when a tariff changes. During regular tariff changes, for example related to the time of the day or at the change from a working day to a public holiday, advice of charge information is sent to a large number of subscribers at the same time.

As the transmission of the advice of charge information elements to all relevant subscribers takes some time, either the first or the last subscribers receive the change information elements not at the accurate time. This causes unnecessary inappropriate charge of advice information in at least some of the mobile terminals.

An alike situation occurs, if for some other reason extensive signalling traffic occurs, for example if a routing rule moves subscribers from one node to another at a predefined time. If forced hand-overs are executed, then extensive signalling takes place.

It is therefore a shortcoming of the state of the art that in the case of a tariff change that is related to a certain point in time, at least some subscribers may get unnecessary inappropriate charging advice information from their mobile terminal.

A further shortcoming of the state of the art is, that the transmission of new charge advice information elements to a large number of subscribers at the same time leads to peak signalling traffic.

### Summary of the invention

It is object of the invention to overcome the shortcomings of the state of the art.
This is achieved by the methods of claim 1 and claim 5, the charge advice information message of claim 8, the computer program of claim 9 and the mobile terminal of claim 10.

Advantageous is the transmission of a time indication according to claim 1. This allows the transmission of advice of charge information in advance.

It is further advantageous, that signalling peaks can be avoided by transmitting the information in advance. This leaves signalling capacity for other tasks that may be executed at the same time.

Further advantageous embodiments can be derived from the dependent claims 2 to 5, and 7 and 8.

Advantageous is the sending of tariff change information and time indication in a single message according to claim 2, by this overall signalling traffic is reduced.

Especially advantageous is that the time indication is a time interval according to claims 3 and 6. Time intervals are already used in combination with timers for the calculation of charge advice information. Furthermore, time intervals do not require a correct absolute time value within a mobile terminal.

Further advantageous is the adapting of the time indication according to claim 4. As the time indication messages are sent during a certain time span, the adapting enables to increase the accuracy of the advice of charge information.

The object of the invention is reached by sending tariff change information in advance. Furthermore a time indication indicating a point in time when the tariff change information becomes valid is sent. By this, the new tariff and the advice of charge information elements describing the new tariff are available at mobile terminals in advance. By this it is secured that at the time when the tariff changes, the valid tariff information is available.

A tariff change information message can be for example a charge advice information message. For clarity reason in the following the charge advice information is used to explain the invention. Any instance calculating charging advice information elements is regarded as a charging information instance.

The time indication can be given in two ways, firstly as a time value indicating an absolute time or secondly as a time interval value indicating the time interval between the sending of the information and the time when the new tariff becomes valid.

### Brief description of the drawings

The following figures show:
- Fig. 1:: depicts a first advice of charge message comprising the inventive tariff change information and a time indication;
- Fig. 2:: depicts, a mobile terminal according to the invention.

### Detailed description of embodiments

In the following the invention is described in more detail by means of embodiments and figures. Equal reference signs indicate equal elements.

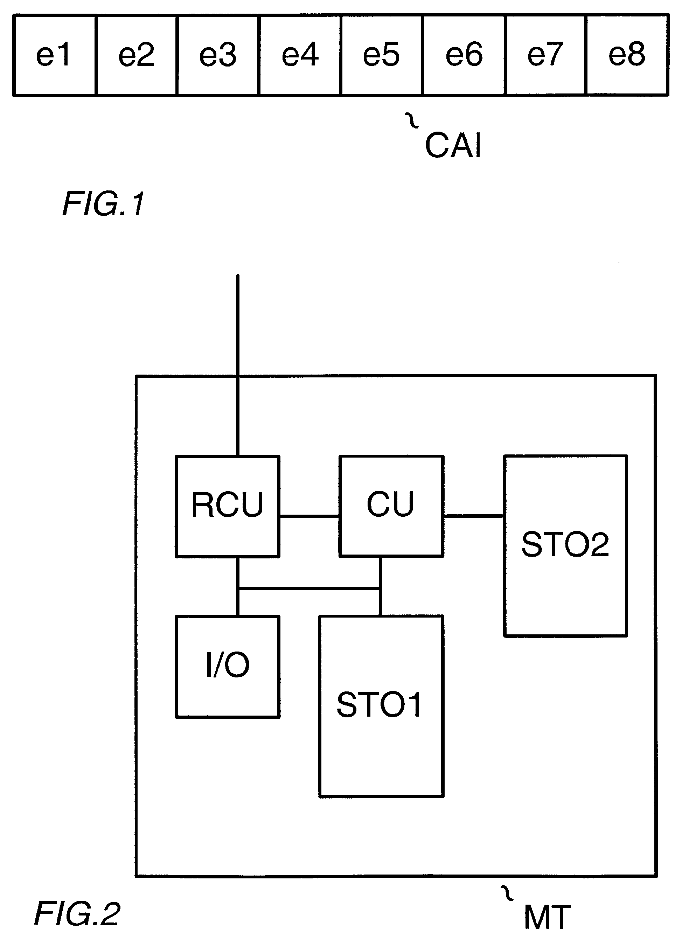

Figure 1 depicts an advice of charge advice information message CAI. The message comprises the known information elements e1, e2, e3, e4, e5, e6, e7, and the information element e8 according to the invention. The information elements e1 to e7 are included for the sake of clarity. The invention works with any other information elements that enable a calculation of advice of charge information.

Element e1 defines the number of units incremented per interval. It is set in terms of the mobile network a user is currently located in.

Element e2 defines the time interval for unitisation, and is specified in seconds.

Element e3 defines the scaling factor to convert from units of the mobile network the user is currently located in, in the following abbreviated as LPLMN, to units of the mobile network the user subscribed to, in the following abbreviated as HPLMN. Element e3 is a dimensionless multiplier.

Element e4 defines the number of units to be incremented on receipt of the charge advice information message. It is specified in units of the LPLMN.

Element e5 defines the number of units incremented per data interval. It is set in terms of LPLMN units/interval.

Element e6 defines the data usage interval for unitisation, and is specified in segments.

Element e7 defines the initial time interval for unitisation, and is specified in seconds.

Element e8 defines the point in time when the charging advice information becomes valid. In a first embodiment of the invention, e8 includes a value of an absolute time, for example a local time value, an international time value or a system time value.

In a preferred embodiment, e8 comprises the value of a time interval, when the charging advice information will become valid after reception, e.g. 20 seconds after receiving.

In an embodiment of the invention, the charging advice information message CAI has to contain only those elements required for the particular situation. If elements are missing from the initial charge advice information CAI message of a call, they shall be treated as zero.

In a preferred embodiment of the invention, in the case that e8 has a value of zero or is missing the other information elements are treated as instantly valid.

In a preferred embodiment of the invention, a mobile terminal receives a tariff change information message sent by a network node, for example from a mobile services switching centre, as part of a connect message. A connect message indicates that a called subscriber accepted a call and that the speech connection between the calling party and the called party is through connected.

The mobile terminal starts a timer to calculate advice of charge information. During the call, the mobile terminal receives a further advice of charge information message, comprising a new set of information elements that will become valid at 9 p.m., for example because of a special night tariff supported by an operator. The time the charge advice information message is sent is 8:58,00 p.m.. Because of that the network node sending the charge advice information calculates a value for element e8 of 2 minutes and puts it into the message.

The mobile terminal receives the charge advice information message, stores the elements comprised in it and starts a timer with a starting value of 2 minutes or 120 seconds. As soon as the timer reaches zero, the new information elements are used for the calculation of advice of charge information.

In a preferred embodiment of the invention, the new values of information elements replace the older values of information elements as soon as the new elements get valid. This can be performed for example by switching a storage address that is used for the calculation or by overwriting the old elements in a storage used for the calculation.

In a preferred embodiment of the invention, the advice of charge information is the sum of the advice of charge calculated before the new information elements become valid and the values calculated afterwards.

In a further embodiment of the invention, elements that indicate or lead to a minimum start value of charging are ignored or set to zero in the case of a tariff change. An example of such an information element is e4.

In another embodiment of the invention, information element e8 comprises the value 9 p.m. in the charge advice information message. The mobile terminal then calculates a time interval as the difference between the point in time indicated in e8 and its current internal time and starts a timer with the resulting interval. In another embodiment the mobile terminal stores the absolute time value and compares it with its internal time.

In a further embodiment of the invention, the mobile terminal receives two messages, one comprising the time indication and one comprising the charge advice information.

In the network the mobile terminal is currently located, charge advice information is to be sent to, for example, 10.000 mobile terminals. In order to avoid peak signalling traffic, the transmission is started well in advance before 9 p.m.. Sending a hundred messages per second, the transmission of charge advice information to all of the terminals takes a hundred seconds.

In a preferred embodiment of the invention, every second the time interval value sent in information element e8 is reduced by one second.

In another embodiment of the invention, the operator sends a charge advice information message to a mobile terminal in a first step. The message comprises an indicator that it will become later in time. Such indicator may be explicit, for example a later valid bit, or implicit. An implicit indication is, for example, the context a message is sent in. If a charge advice information message is sent neither sent with a connect message, nor during a hand-over procedure, this indicates a tariff change.
In a second step, the operator sends a time indication identifying a point in time, when the elements in the charge advice information message become valid.

In an embodiment of the invention, the message comprising the point in time is sent before the message comprising new information elements.

Figure 2 depicts a mobile terminal MT, comprising a radio control unit RCU, a central unit CU, a first storage STO1, an input output unit I/O and a second storage STO2.

The radio control unit RCU handles radio related matters, exchanges signalling messages and payload with the central unit CU. The input output unit I/O communicates with a user or the mobile terminal MT. The storage STO1 is a general purpose storage. The central unit controls the other units and transforms inputs and outputs received from the radio control unit RCU and the input output unit I/O. The central unit CU is adapted to calculate advice of charge information and to view said information via the input output unit I/O.

Storage STO2 is a storage for storing advice of charge information that will become valid in a certain point of time. The central unit CU comprises at least one timer, not depicted, that monitors the time until the advice of charge information becomes valid. If the point in time is reached when the time information becomes valid, it triggers the central unit to activate the charge information stored in the storage STO2. The central unit then uses the values of the charge advice information elements stored in the storage STO2 to calculate advice of charge information.

The invention further relates to a computer program, stored on a computer readable medium or loaded into a memory of a computing device, adapted to performing a method according to any of the claims 1 to 8. A computer readable medium is any means that stores information and can be read by an input device of a computer, for example a floppy disc, a hard disc, or an optical disc.

A computer device is a device controlled by stored program, for example a computer, a network node or a mobile terminal.

## Claims

1. Method for distributing tariff change information in a network for mobile telecommunication, the network comprising at least one charging information instance providing at least one mobile terminal (MT) served by the network with advice of charge information, the method comprising the steps of:
- sending a message (CAI) to the at least one mobile terminal (MT) comprising a tariff change information that will become valid at a certain point in time, and
- sending a message (CAI) to the at least one mobile terminal (MT) comprising a time indication (e8) indicating the point in time when the tariff change information will become valid.

2. Method according to claim 1, wherein the message comprising tariff change information and the message comprising the time indication are sent together in a single message (CAI).

3. Method according to any of the preceding claims, wherein the time indication is a value of a time interval.

4. Method according to claim 3, wherein the value of the time indication is adapted, if appropriate, before sending, if the time indication is sent consecutively to a plurality of mobile terminals.

5. Method for processing the distributed tariff change information of claim 1 in a mobile terminal (MT), comprising the steps of:
- receiving a message (CAI) comprising a tariff change information (e1, e2, e3, e4, e5, e6, e7) that will become valid at a certain point in time,
- storing the tariff change information,
- receiving a message comprising a time indication (e8) indicating the point in time when the tariff change information becomes valid,
- storing the time indication,
- monitoring time in order to use the received tariff change information for generating advice of charge information as soon as the point in time indicated by the time indicator is reached,
- using the tariff change information for generating charging advice information when the indicated point in time is reached.

6. Method according to claim 5, wherein the monitoring of time is performed by starting a timer with the value of the time indication, if the time indication is a value of a time interval.

7. Method according to claim 5 or 6, wherein the tariff change information is at least one charge advice information element replacing at least one further charge advice information element currently used within the mobile terminal for calculating an advice of charge value.

8. Charge advice information message (CAI) comprising a time indicator (e8) and at least one information element (e1, e2, e3, e4, e5, e6, e7) comprising tariff information that will become valid at a point of time indicated by the time indicator.

9. Computer program, stored on a computer readable medium or in a form that can be loaded into the memory of a computing device, adapted to perform a method according to any of the claims 1 to 8.

10. Mobile terminal (MT) for communication in a network for mobile telecommunication, the mobile terminal being capable of calculating charge advice information, **characterised by**
a storage (STO2) for storing charge advice information elements that will become valid at a certain point in time, and monitoring means for determining the point in time when the charge advice information element becomes valid.
